# EUROPEAN PATENT APPLICATION

(11) **EP 4 063 559 A1**
(43) Date of publication of application: **28.09.2022**
(21) Application number: 20891341.8
(22) Date of filing: 20.11.2020
(51) Int. Cl.: D06M 10/02, D06M 11/74

(54) **COMPOSITE MATERIAL AND METHOD FOR PRODUCING SAME**

(30) Priority: 20.11.2019 JP 2019210011; 18.11.2020 WO PCT/JP2020/042901
(71) Applicant: Nitta Corporation, Osaka-shi, Osaka 556-0022 (JP)
(72) Inventor: KOMUKAI Takuji, Osaka-shi, Osaka 556-0022 (JP); ONIZUKA Maki, Osaka-shi, Osaka 556-0022 (JP)
(74) Representative: Bandpay & Greuter
(86) International application number: PCT/JP2020/043412
(87) International publication number: WO 2021/100859

(57) **Abstract**

Provided are a composite material capable of further enhancing properties derived from carbon nanotubes adhered to a fiber, and a method for manufacturing the composite material. In a composite material 10, a structure 12 including a plurality of carbon nanotubes 14 is formed on a surface of a fiber 11 that constitutes the composite material. The carbon nanotubes 14 have a bent shape. The carbon nanotubes 14 adhere to the surface of the fiber 11 which is a curved surface in various postures, and another carbon nanotube 14 enters a space (gap) formed between the carbon nanotubes 14 and the surface of the fiber 11, between the adhered carbon nanotubes 14, or the like. According to this, the structure 12 is formed by more carbon nanotubes 14.

## Description

### Technical Field

The present invention relates to a composite material and a method for manufacturing the composite material.

### Background Art

There is suggested a composite material including a structure that includes a fiber and a plurality of carbon nanotubes (hereinafter, referred to as "CNTs") adhered to a surface of the fiber (for example, PTL 1). In the structure of the composite material, the plurality of CNTs have a network structure in which the CNTs are connected to each other, and adhere to the surface of the fiber. A fiber-reinforced molded article in which a resin is reinforced by the composite material as a reinforcement fiber includes the fiber, and thus higher strength and rigidity are obtained in comparison to a resin alone, and has improved electrical conductivity, thermal conductivity, and a mechanical property which are derived from the CNTs.

### Citation List

### Patent Literature

PTL 1: JP-A-2013-76198

### Summary of Invention

### Technical Problem

The use of the above-described fiber-reinforced molded article is expanded to various fields, and a request for the fiber-reinforced molded article further increases. On the other hand, in a fiber having a small diameter, an effect of improving mechanical properties and the like derived from the CNTs is likely to be obtained, but in a fiber having a large diameter, the effect of improving the mechanical properties and the like derived from the CNTs is less likely to be obtained, and thus it is desired to further enhance properties derived from the CNTs.

The invention has been made in consideration of the circumstances, and an object thereof is to provide a composite material capable of enhancing properties derived from CNTs adhered to a fiber, and a method for manufacturing the composite material.

### Solution to Problem

According to an aspect of the invention, there is provided a composite material including: a fiber; and a structure which includes a plurality of carbon nanotubes and has a network structure in which the carbon nanotubes are in direct contact with each other, and in which the carbon nanotubes directly adhere to a surface of the fiber. The carbon nanotubes have a bent shape including a bent portion.

According to another aspect of the invention, there is provided a method for manufacturing a composite material. The method includes: an ultrasonic process of applying ultrasonic vibration to a dispersion in which a plurality of carbon nanotubes having a bent shape including a bent portion are dispersed; and an adhesion process of immersing a continuous fiber in the dispersion to which the ultrasonic vibration is applied, and adhering the plurality of carbon nanotubes to the fiber to form a structure on a surface of the fiber.

### Advantageous Effects of Invention

According to the invention, since the carbon nanotubes adhered to the fiber have a bent shape including a bent portion, the number of the carbon nanotubes adhered to the fiber increases, and properties derived from the carbon nanotubes can be enhanced.

According to the invention, since the composite material is manufactured by causing the carbon nanotubes having a bent shape including a bent portion to adhere to the surface of the fiber in a structure knitted like a nonwoven fabric fiber, the number of the carbon nanotubes adhered to the fiber can be increased, and it is possible to manufacture a composite material in which properties derived from the carbon nanotubes are further enhanced.

### Brief Description of Drawings

Fig. 1 is an explanatory diagram illustrating a configuration of a composite material according to a first embodiment.
Fig. 2 is an explanatory diagram illustrating a multifilament in which the composite material is made into a single yarn.
Fig. 3 is an explanatory diagram schematically illustrating a CNT adhesion state to a surface of a fiber.
Fig. 4 is an explanatory diagram illustrating a configuration of an adhesion device that causes CNTs to adhere to a fiber.
Fig. 5 is an explanatory diagram illustrating a fiber bundle in a state of being opened on a guide roller.
Fig. 6 is an explanatory diagram illustrating a passing position of the fiber in a dispersion.
Fig. 7 is a SEM photograph showing an example of a bent state of a material CNT.
Fig. 8 is an explanatory diagram illustrating a configuration of a composite material in which a fixing resin part is provided according to a second embodiment.
Fig. 9 is an explanatory diagram illustrating a state in which carbon nanotubes are fixed by the fixing resin part.
Fig. 10 is a perspective view illustrating an example of a flat belt using the composite material.
Fig. 11 is a perspective view illustrating an example of a V-belt using the composite material.
Fig. 12 is a perspective view illustrating an example of a timing belt using the composite material.
Fig. 13 is a graph illustrating a cut fiber length measured by a fragmentation method in a case of using a glass fiber.
Fig. 14 is a SEM photograph showing a structure formed from a glass fiber.

### Description of Embodiments

### [First Embodiment]

### [Composite Material]

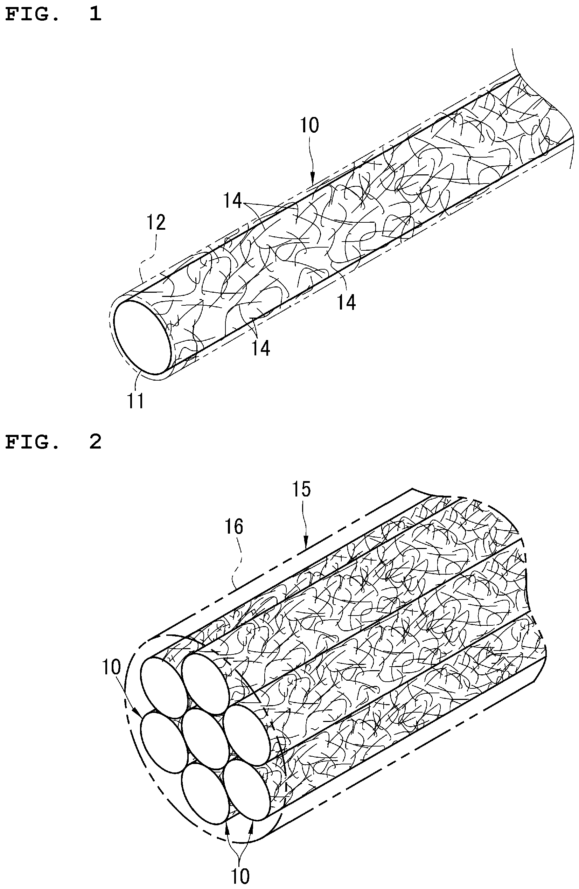

In Fig. 1, a composite material 10 includes a fiber 11 and a structure 12 that is formed on a surface of the fiber 11. In the structure 12, a plurality of carbon nanotubes (hereinafter, referred to as "CNTs") 14 are entangled. For example, the composite material 10 is set as a fiber in which a resin or the like is impregnated in the structure 12 (hereinafter, referred to as "resin-impregnated fiber"), or is used as a single yarn that constitutes a multifilament or a reinforcement fiber of a fiber-reinforced molded article. The composite material 10, and the resin-impregnated fiber manufactured by using the composite material 10, the multifilament, the fiber-reinforced molded article, or the like (hereinafter, referred to as "secondary product") includes the structure 12 on a surface of the fiber 11, and thus mechanical properties and the like are improved. That is, the mechanical properties and the like are improved due to the CNTs 14 adhered to the surface of the fiber 11.

As in an example of a multifilament 15 using the composite material 10 as illustrated in Fig. 2, the multifilament 15 includes a plurality of the composite materials 10 and a matrix resin 16. In Fig. 2, the multifilament 15 including six pieces of the composite materials 10 is illustrated, but the number of the composite materials 10 is not particularly limited, and the multifilament 15 may be constituted by several thousands of composite materials 10 or several hundred thousands of composite materials 10. In addition, one multifilament 15 can be formed by twisting a plurality of the composite material 10.

As the matrix resin 16, for example, a resin such as polyurethane, or an elastomer such as a synthetic rubber can be used. The matrix resin 16 is interposed between the composite materials 10 to couple the composite materials 10 to each other. The matrix resin is impregnated up to the structure 12 of the composite material 10 and is cured.

The fiber 11 is not particularly limited, and examples thereof include a resin fiber such as nylon, polyester, vinylon, and acryl, a glass fiber, and a mineral fiber. In addition, a diameter of the fiber 11 is also not particularly limited, and a fiber having a diameter within a range of 5 to 100 µm can be preferably used, and a fiber having a diameter within a range of 5 to 30 µm can be more preferably used. As the fiber 11, a long fiber is used, and the length is preferably 50 m or longer, more preferably within a range of 100 to 100,000 m, and still more preferably within a range of 100 to 10,000 m. Note that, for example, the fiber 11 may be cut to a short size after forming the structure 12.

The CNTs 14 which constitute the structure 12 are evenly dispersed and entangled over approximately the entirety of a surface of the fiber 11 and form a network structure in which a plurality of the CNTs 14 are connected in a state of being entangled to each other. Connection stated here includes physical connection (simple contact) and chemical connection. The CNTs 14 come into direct contact with each other without a dispersing agent such as a surfactant or an inclusion such as adhesive between the CNTs 14.

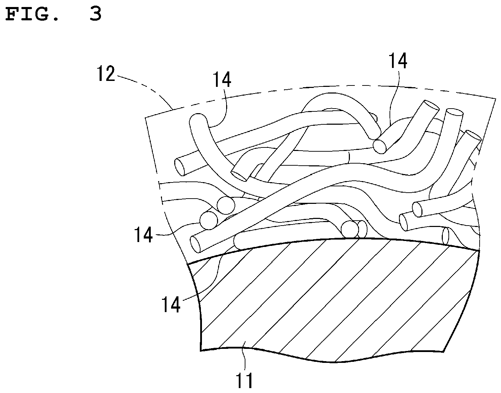

As schematically illustrated in Fig. 3, some CNTs 14 which constitute the structure 12 directly adhere to the surface of the fiber 11 and are fixed to the surface. According to this, the structure 12 directly adheres to the surface of the fiber 11. Description of "the CNTs 14 directly adhere to the surface of the fiber 11" represents that the CNTs 14 directly adhere to the fiber 11 without inclusions such as a dispersing agent including a surfactant, and adhesive between the CNTs 14 and the surface, and the adhesion (fixing) is obtained due to coupling by a Vander Waals force. Since some CNTs 14 which constitute the structure 12 directly adhere to the surface of the fiber 11, it enters a direct contact state in which the structure 12 comes into direct contact with the surface of the fiber 11 without inclusions such as the dispersing agent and the adhesive.

As the CNTs 14, CNTs having a bent shape are used. According to this, some of the CNTs 14 which constitute the structure 12 may be entangled with other CNTs 14 to be fixed to the fiber 11 without direct contact with the surface of the fiber 11. In addition, some of the CNTs 14 directly adhere to the surface of the fiber 11 and are entangled with other CNTs 14 to be fixed to the fiber 11. Hereinafter, description will be made while fixing of the CNTs 14 to the fiber 11 is collectively referred to as adhesion to the fiber 11. Note that, a state in which the CNTs 14 are entangled or intertwined includes a state in which some of the CNTs 14 are pressed against other CNTs 14.

As described above, in addition to direct contact with the surface of the fiber 11, some of the CNTs 14 which constitute the structure 12, which are not in direct contact with the surface of the fiber 11 are fixed to the fiber 11 by entanglement with other CNTs 14, or the like. Accordingly, the structure 12 of this example includes more CNTs 14 than the CNTs which directly adhere to the surface of the fiber as in the structure of the composite material of the related art. That is, the number of the CNTs 14 which adhere to the fiber 11 further increases and the thickness of the structure 12 is larger in comparison to the related art.

As described above, since the plurality of CNTs 14 are connected to each other without inclusions between surfaces thereof and constitute the structure 12, the composite material 10 exhibits the performance of electrical conductivity and thermal conductivity derived from the CNTs. In addition, since the CNTs 14 adhere to the surface of the fiber 11 without inclusions, the CNTs 14 which constitute the structure 12 are less likely to be peeled off from the surface of the fiber 11, and mechanical strength of the composite material 10 and secondary products using the composite material 10 is improved. In addition, since the thickness of the structure 12 is large, the mechanical strength is further improved. Accordingly, even in the fiber 11 having a large diameter, the composite material 10 and the secondary products having improved mechanical strength are obtained. Note that, hereinafter, description will be given of a case of a fiber-reinforced molded article as the secondary products, but this is also true of a case of a resin-impregnated fiber or a multifilament.

For example, in the fiber-reinforced molded article, a matrix resin is impregnated into a fiber bundle including a plurality of the composite materials 10 provided with the structure 12 and is cured therein. The matrix resin of the fiber-reinforced molded article is impregnated into the structure 12 and is cured, and thus the structure 12 of the composite material 10 is fixed to the surface of the fiber 11 and the matrix resin. According to this, a state in which each of a plurality of the fibers 11 is strongly bonded to the matrix resin is obtained, and peeling strength between the composite materials 10 and the matrix resin is improved. In addition, bonding with the matrix resin occurs over the entirety of the composite materials 10, and thus a fiber reinforcing effect is obtained over the entirety of the fiber-reinforced molded article.

As described above, a region formed when the matrix resin is impregnated into the CNTs 14 constituting the structure 12 and is cured (hereinafter, referred to as "composite region") exists at the periphery of each of the fibers 11 in the fiber-reinforced molded article. Since the structure 12 includes a CNT 14 that is floating from a surface, a concentration (density) of the CNTs 14 in the composite region becomes lower as being spaced apart from the composite material 10. In the composite region, the CNTs 14 and the matrix resin are composited, and thus high strength and flexibility derived from the CNTs 14 are provided. In addition, an effect of mitigating stress concentration, a constraining effect of suppressing displacement of the composite material 10, an effect of efficiently absorbing mechanical energy from the outside, and the like are obtained due to the composite region.

For example, in a case where energy such as vibration propagates between the fibers 11, energy of the propagating vibration is absorbed and damped by friction of the composite region at the periphery of each of the fibers 11. As a result, for example, vibration damping properties (damping properties) of the fiber-reinforced molded article are improved. In addition, when an external force is applied to the fiber-reinforced molded article and displacement occurs at the inside of the fiber-reinforced molded article, displacement occurs in the fiber 11 inside the fiber-reinforced molded article. Due to the displacement of the fiber 11, the structure 12 in the composite region is stretched, and a constraining effect is obtained due to a network structure of the CNTs 14. According to this, properties of the CNTs 14 are exhibited, and thus an elastic modulus of the fiber-reinforced molded article can be raised.

The properties derived from the CNTs 14 of the fiber-reinforced molded article are exhibited due to the properties of the composite region as described above, the effect by the composite region, and the like. As described above, since the structure 12 has a structure in which the number of the CNTs 14 adhered to the fiber 11 is increased, and the CNTs 14 are knitted like a non-woven fabric fiber, the properties of the fiber-reinforced molded article which are derived from the CNTs are higher in comparison to a composite material in which a structure like the structure 12 is not formed.

A plurality of the structures 12 formed in a plurality of the composite materials 10 have an independent structure, and the structure 12 of one composite material 10 and the structure 12 of another composite material 10 do not share the same CNT 14. That is, CNTs 14 included in the structure 12 provided in one fiber 11 are not included in the structure 12 provided in another fiber 11.

For example, a sizing agent (not illustrated) is fixed to surfaces of the CNTs 14 which constitute the structure 12. The sizing agent is formed from a cured article or an uncured article of a reactive curable resin, a thermosetting resin, or a thermoplastic resin. The sizing agent is formed by performing a sizing treatment.

The sizing agent covers surfaces of the CNTs 14, and at a contact portion where the CNTs 14 are in contact with each other, the sizing agent forms an inclusion portion that wraps and covers the contact portion. Due to the inclusion portion, a state in which the CNTs 14 are in contact with each other is made to be stronger, and the structure 12 is less likely to collapse. At the inclusion portion, since the sizing agent is fixed to the CNTs 14 in a state in which the sizing agent does not enter between the CNTs 14 which are in contact with each other, the CNTs 14 are in direct contact with each other at the contact portion.

In addition, in the structure 12, a void portion (mesh) that is surrounded by a plurality of the CNTs 14 is formed due to the CNTs 14, but it is preferable that the sizing agent does not close the void portion so that impregnation of the matrix resin into the structure 12 is not hindered. In order for the void portion not to be closed, a volume of the sizing agent is preferably set to be 30% or less of a volume of the CNTs 14 of the structure 12. Note that, the sizing agent is formed on the surfaces of the CNTs 14, and is different from the following fixing resin part that enters the inside of the structure 12 and fixes the CNTs 14 to the fiber 11. In addition, the sizing agent may not be applied to the structure 12.

As described above, the CNTs 14 adhered to the fiber 11 have a bent shape. The bent shape of the CNTs 14 is obtained because a bent portion is provided due to existence of a five-membered ring, a seven-membered ring, and the like in a graphite structure of the CNTs 14, and the bent shape is a shape from which the CNTs 14 can be evaluated to be curved, to be bent, or the like from observation with a SEM. For example, the bent shape of the CNTs 14 represents that the bent portion exists at least at one site per an average length of a use range of the CNTs 14 to be described later. Even in a case where the bent shape is long, the CNTs 14 having the bent shape adhere to the surface of the fiber 11 which is a curved surface in various postures. In addition, the CNTs 14 having the bent shape are likely to form a space (gap) between the CNTs 14 and the surface of the fiber 11 to which the CNTs 14 adhere, or between the adhered CNTs 14, and another CNT 14 enters the space. According to this, when using the CNTs 14 having the bent shape, the number of the CNTs 14 adhered to the fiber 11 (the number of the CNTs 14 forming the structure 12) further increases in comparison to the case of using CNTs having a shape with high linearity.

The length of the CNTs 14 is preferably within a range of 0.1 to 10 µm. When the length is 0.1 µm or longer, the CNTs 14 can more reliably form the structure 12 in which the CNTs 14 are entangled and come into direct contact with each other or are directly connected to each other, and it is possible to more reliably form the space which another CNT 14 enters as described above. In addition, when the length of the CNTs 14 is 10 µm or less, the CNTs 14 do not adhere between a plurality of the fibers 11. That is, as described above, the CNT 14 that is contained in the structure 12 provided in one fiber 11 is not contained in the structure 12 provided in another fiber 11.

The length of the CNTs 14 is more preferably within a range of 0.2 to 5 µm. When the length of the CNTs 14 is 0.2 µm or longer, the number of the CNTs 14 adhered increases and the structure 12 can be made thick. When the length is 5 µm or less, when causing the CNTs 14 to adhere to the fiber 11, the CNTs 14 are less likely to aggregate, and the CNTs 14 are likely to be more evenly dispersed. As a result, the CNTs 14 more evenly adhere to the fiber 11.

Note that, with regard to the CNTs adhered to the fiber 11, mixing-in of CNTs with high linearity or mixing-in of CNTs having a length out of the above-described range are not excluded. For example, even in a case where mixing-in occurs, since the CNTs with high linearity enter a space formed by the CNTs 14, it is possible to increase the number of the CNTs adhered to the fiber 11.

It is preferable that an average diameter of the CNTs 14 is within a range of 1 nm to 15 nm, and more preferably a range of 3 nm to 10 nm. When the diameter is 15 nm or less, the CNTs 14 are very flexible and are likely to adhere to the fiber 11 along a surface thereof, and are likely to be fixed to the fiber 11 in a state of being entangled with other CNTs 14. In addition to this, formation of the structure 12 becomes more reliable. In addition, when the diameter is 10 nm or less, coupling between the CNTs 14 constituting the structure 12 becomes strong. Note that, the diameter of the CNTs 14 is set as a value measured by using a transmission electron microscope (TEM) photograph. The CNTs 14 may be a single-layer structure or a multi-layer structure, but the multi-layer structure is preferable.

As described above, when the CNTs 14 are set to have the bent shape, it is possible to further increase the number of the CNTs 14 adhered to the fiber 11 in comparison to the case of using CNTs with high linearity, and it is possible to increase the thickness of the structure 12. In addition, the structure 12 in which the CNTs 14 are knitted like a non-woven fabric fiber is formed. As a result, the mechanical strength is raised, and in a case where an external force is applied to a secondary product and the fiber 11 is displaced, a constraining effect due to the structure 12 is large, and thus the elastic modulus can be further raised. In addition, a mechanical energy absorbing effect due to the composite region at the periphery of the fiber 11 also increases, and the vibration damping property of secondary products can be further enhanced.

As an example of the improved mechanical strength of the secondary products, an improvement in durability against repetitive bending can be exemplified. As described above, in the fiber-reinforced molded article using the composite material 10 in which the CNTs 14 adhere to the surface of the fiber 11, it is considered that the durability against the repetitive bending can be enhanced by a peeling strength improving effect due to inclusion of the structure 12, and the mechanical energy absorbing effect due to the composite region. The peeling strength improving effect and the mechanical energy absorbing effect can be further enhanced in proportion to an increase in the number of the CNTs 14 adhered to the surface of the fiber 11, and thus the durability against the repetitive bending becomes high. The composite material 10 having the above-described properties is suitable as a spring material of a coil spring or a leaf spring, or the like to which a load is repetitively applied, and thus the secondary product containing the composite material 10 is applicable to various springs such as the coil spring and the leaf spring.

In the secondary products using the composite material 10, for example, in the fiber-reinforced molded article, composite regions in which the matrix resin is impregnated into the structure 12 and is cured are fixed to each other, and thus a cross-linking structure that cross-links the fibers 11 occurs . Each of the composite regions in which the impregnated matrix resin is cured has higher hardness in comparison to a cured matrix resin alone, and a large elastic limit, that is, high elasticity. In addition, the composite region has higher wear resistance in comparison to the matrix resin. Due to mutual coupling of a plurality of the composite regions, coupling between the composite materials 10 becomes strong, and resistance against repetitive bending of the fiber-reinforced molded article using the composite material 10 is improved. Since the cross-linking structure is formed in a case where a distance between the composite materials 10 is short to a certain extent in which a plurality of the structures 12 come into contact with each other, the larger the thickness of the structure 12, the more advantageous because the more cross-links occur. In addition, in a case where the composite material 10 is set to have a fabric shape, or in a case where the composite material 10 is bundled like a multifilament, a cross-linking portion where the composite regions are fixed to each other increases, and the effect due to the cross-linking structure increases.

For example, the thickness of each portion of the structure 12 (a length in a diameter direction of the fiber 11) can be acquired as follows. Specifically, a part of the structure 12 on the surface of the fiber 11 is bonded to a cellophane tape or the like and is peeled off, and a cross-section of the structure 12 remaining on the surface of the fiber 11 is measured with a SEM or the like to acquire the thickness. In order to almost uniformly cover a measurement range of a predetermined length along a fiber axis direction of the fiber 11, the thickness of the structure 12 is measured at ten sites in the measurement range, and an average thereof is set as the thickness of the structure 12. For example, the length of the measurement range is set to a length that is five times an upper limit of a range of the length of the CNTs 14. The number of CNTs 14 adhered to the fiber 11 can be evaluated with the thickness of the structure 12.

The thickness (average) of the structure 12 which is obtained as described above is within a range of 10 nm to 300 nm, preferably within a range of 15 nm to 200 nm, and more preferably 50 nm to 200 nm. When the thickness of the structure 12 is 200 nm or less, an impregnation property with a resin between the fibers 11 is more satisfactory.

### [Method for Manufacturing Composite Material]

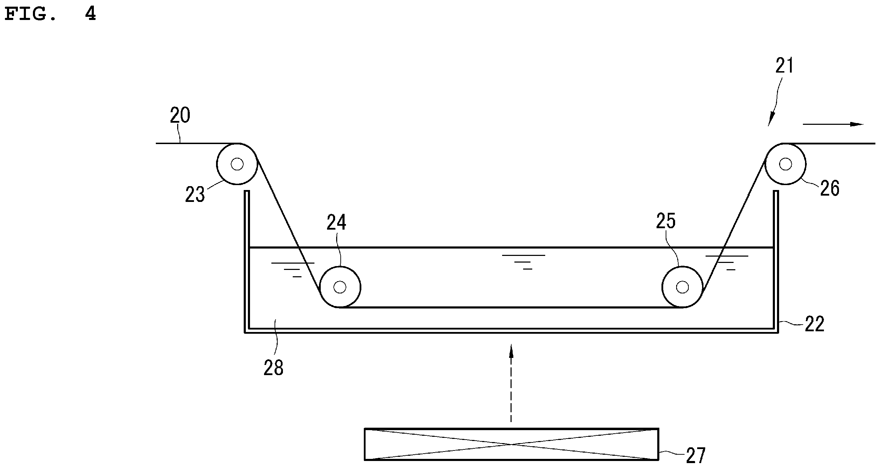

Next, a method for manufacturing the composite material 10 will be described. In this example, description will be given of a case of manufacturing the composite material 10 by using a fiber bundle 20 (refer to Fig. 4) including a plurality of the fibers 11, but the composite material 10 can be manufactured in a similar manner by using the fiber 11 alone instead of the fiber bundle 20.

The fibers 11 which constitute the fiber bundle 20 are substantially not entangled, and a fiber axis direction of each of the fibers 11 is aligned. The fiber axis direction is an axial direction (extension direction) of the fibers 11. In this example, the fiber bundle 20 includes a plurality of fibers 11. The number of the fibers 11 constituting the fiber bundle 20 is not particularly limited, and can be set, for example, within a range of 100 to 10,000,000.

Entangling of the fibers 11 in the fiber bundle 20 can be evaluated with the degree of disturbance of the fibers 11. For example, the fiber bundle 20 is observed with a scanning electron microscope (SEM) at a constant magnification, and lengths of a predetermined number of (for example, 10) fibers 11 in an observation range (a predetermined length range of the fiber bundle 20) are measured. The degree of disturbance of the fibers 11 can be evaluated on the basis of a variation, a difference between a maximum value and a minimum value, and a standard deviation of the lengths which are obtained from the measurement results and relate to the predetermined number of fibers 11. In addition, it can be determined that the fibers 11 are not substantially entangled by measuring the degree of entanglement, for example, in conformity to a method of measuring the degree of entanglement in JIS L1013:2010 "Testing methods for man-made filament yarns". The smaller the measured degree of entanglement is, the less the fibers 11 are entangled with each other in the fiber bundle 20.

In the fiber bundle 20 in which the fibers 11 are not substantially entangled with each other, or are less entangled with each other, the fibers 11 are likely to be uniformly opened. According to this, it is easy to cause the CNT 14 to uniformly adhere to each of the fibers 11, a resin is uniformly impregnated into the fiber bundle 20, and each of the composite materials 10 contributes to the strength.

In order to form the structure 12 by causing the CNTs 14 to adhere to each of the fibers 11 in the fiber bundle 20, the fiber bundle 20 is immersed in a CNT isolated dispersion (hereinafter, simply referred to as "dispersion") in which the CNTs 14 are isolated and dispersed, and mechanical energy is applied to the dispersion. The term "isolated and dispersed" represents a state in which the CNTs 14 are physically separated one by one and are dispersed in a dispersion medium without entanglement, and a state in which a ratio of an aggregate in which two or more CNTs 14 are aggregated in a bundle form is 10% or less. Here, when the ratio of the aggregate is 10% or more, aggregation of the CNTs 14 in the dispersion medium is promoted, and adhesion of the CNTs 14 to the fibers 11 is inhibited.

As illustrated in Fig. 4, as an example, an adhesion device 21 includes a CNT adhesion tank 22, guide rollers 23 to 26, an ultrasonic wave generator 27, a travelling mechanism (not illustrated) that causes the fiber bundle 20 to travel at a constant speed, and the like. A dispersion 28 is stored in the CNT adhesion tank 22. The ultrasonic wave generator 27 irradiates the dispersion 28 in the CNT adhesion tank 22 with ultrasonic waves from a lower side of the CNT adhesion tank 22.

The fiber bundle 20 having a long length (for example, approximately 100 m) in which the structure 12 is not formed is continuously supplied to the adhesion device 21. The fiber bundle 20 that is supplied is wound around the guide rollers 23 to 26 in this order, and travels at a constant speed by the travelling mechanism. The fiber bundle 20 in which the sizing agent does not adhere to the fiber 11 is supplied to the adhesion device 21. Note that, the sizing agent stated here represents an object adhered to the surfaces of the fibers 11 to prevent entanglement of the fibers 11, and the like, and is different from the sizing agent and the fixing resin part described above.

The fiber bundle 20 is wound around the guide rollers 23 to 26 in an opened state. Appropriate tension acts on the fiber bundle 20 wound around the guide rollers 23 to 26, and thus the fibers 11 are less likely to be entangled with each other. It is preferable that the winding of the fiber bundle 20 around the guide rollers 24 to 26 is set to a smaller winding angle (90° or less).

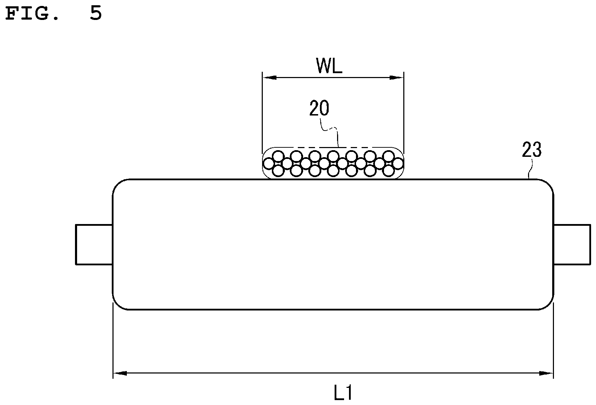

Any of the guide rollers 23 to 26 is a flat roller. As illustrated in Fig. 5, a roller length (a length in an axial direction) L1 of the guide roller 23 is set to be sufficiently larger than a width WL of the fiber bundle 20 that is opened. With regard to the guide rollers 24 to 26, as in the guide roller 23, the roller length is set to be sufficiently larger than the width WL of the opened fiber bundle 20. For example, the guide rollers 23 to 26 have the same size. In the opened fiber bundle 20, a plurality of the fibers 11 are aligned in the thickness direction (a diameter direction of the guide rollers).

Among the guide rollers 23 to 26, the guide rollers 24 and 25 are disposed in the CNT adhesion tank 22. According to this, the fiber bundle 20 linearly travels between the guide rollers 24 and 25 in the dispersion 28 at a constant depth.

A travelling speed of the fiber bundle 20 is preferably set within a range of 0.5 to 10,000 m/minute. The higher the travelling speed of the fiber bundle 20 is, the further productivity is improved. The lower the travelling speed is, the more effective for uniform adhesion of the CNTs 14, and the more effective for suppression of entanglement of the fibers 11. In addition, the less entanglement between the fibers 11 is, the further uniformity of adhesion of the CNTs 14 to the fibers 11 is raised. When the travelling speed of the fiber bundle 20 is 100 m/minute or less, entanglement between the fibers 11 is more effectively suppressed, and adhesion uniformity of the CNTs 14 can be further raised. In addition, the travelling speed of the fiber bundle 20 is more preferably set within a range of 5 to 50 m/minute.

The ultrasonic wave generator 27 applies ultrasonic vibration as mechanical energy to the dispersion 28. According to this, in the dispersion 28, a reversible reaction state in which a dispersion state in which the CNTs 14 are dispersed and an aggregation state in which the CNTs 14 are aggregated vary alternately is formed. When the fiber bundle 20 is caused to pass through the dispersion 28 that is in the reversible reaction state, at the time of transitioning from the dispersion state to the aggregation state, the CNTs 14 adhere to the fibers 11 due to Van der Walls force. The mass of the fibers 11 is as large as 100,000 or more times the mass of the CNTs 14, energy necessary for detachment of the adhered CNTs 14 is more than energy due to the ultrasonic vibration. According to this, the CNTs 14 adhered once to the fibers 11 are not peeled off from the fibers 11 by the ultrasonic vibration after adhesion. Note that, since the mass is very small, the dispersion state and the aggregation state alternately vary between the CNTs 14 due to the ultrasonic vibration.

When transition from the dispersion state to the aggregation state is repetitively performed, a plurality of CNTs 14 adhere to each of the fibers 11, and the structure 12 is formed. As described above, when using the CNTs 14 having a bent shape, other CNTs 14 enter a space formed between the CNTs 14 and the surfaces of the fibers 11 to which the CNTs adhere, between the adhered CNTs 14, or the like, and thus more CNTs 14 adhere to the fibers 11 and the structure 12 is formed.

A frequency of the ultrasonic vibration applied to the dispersion 28 is preferably 40 to 950 kHz. When the frequency is 40 kHz or higher, entanglement between the fibers 11 in the fiber bundle 20 is suppressed. In addition, when the frequency is 950 kHz or lower, the CNTs 14 adhere to the fibers 11 in a satisfactory manner. In order to further reduce entanglement of the fibers 11, the frequency of the ultrasonic vibration is preferably 100 kHz or higher, and more preferably 130 kHz or higher. In addition, the frequency of the ultrasonic vibration is more preferably 430 kHz or lower.

In addition, the present inventors found that the number of the CNTs 14 adhered to the fibers 11 becomes almost the maximum while securing uniformity of adhesion of the CNTs 14 to the fibers 11 when the number of times of transition from the dispersion state to the aggregation state in the CNTs 14 reaches 65,000. Note that, the maximum value of the number of the CNTs 14 adhered varies in accordance with a CNT concentration of the dispersion 28, and increases as the CNT concentration of the dispersion 28 is higher. However, when the CNT concentration of the dispersion 28 becomes a high concentration at which the CNTs 17 cannot take a dispersion state when applying the ultrasonic vibration, adhesion of the CNTs 17 to the fibers 11 cannot be performed.

According to this, it is preferable to determine the travelling speed of the fiber bundle 20, a travelling distance of the fiber bundle 20 in the dispersion 28 (an interval between the guide rollers 24 and 25), and the frequency of the ultrasonic vibration that is applied to the dispersion 28 so that the length of a period during which the fiber bundle 20 is travelling in the dispersion 28, that is, time (hereinafter, referred to as "immersion time") for which the fiber bundle 20 is travelling between the guide rollers 24 and 25 becomes 65,000 or more times a cycle of the ultrasonic vibration applied to the dispersion 28. That is, it is preferable that when the frequency of the ultrasonic vibration is set as fs (Hz), and the immersion time is set as Ts (second), a relationship of "Ts ≥ 65, 000/fs" is satisfied. For example, when the frequency of the ultrasonic vibration is 130 kHz and the distance along which the fiber bundle 20 travels in the dispersion 28 is 0.1 m, the travelling speed of the fiber bundle 20 can be set to 12 m/minute or less. In addition, even in a case where the fiber bundle 20 is immersed in the dispersion 28 in a plurality of times in a division manner, when a total number of immersion times is set to 65,000 or more times the cycle of the ultrasonic vibration, the number of the CNTs 14 adhered can be almost the maximum.

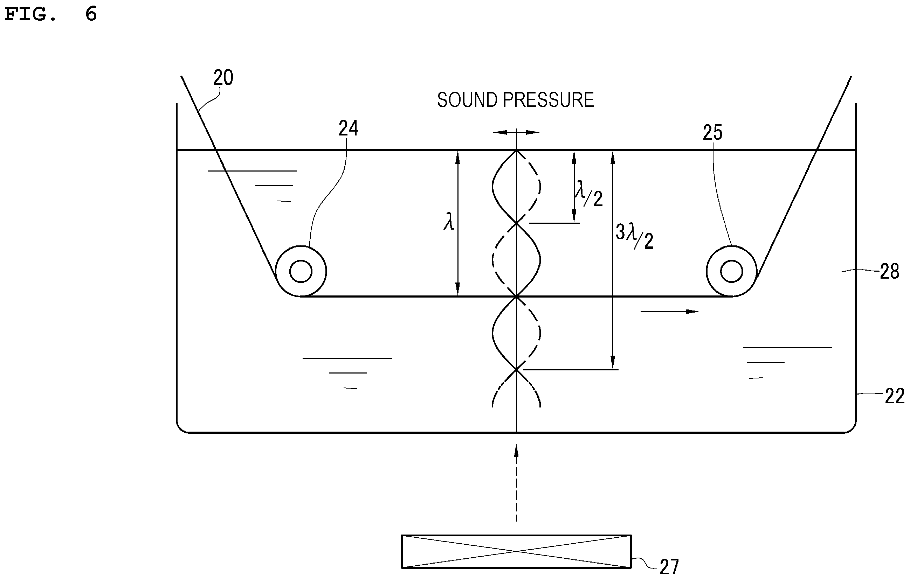

As schematically illustrated in Fig. 6, a standing wave in which a distribution of a sound pressure (amplitude) is determined is generated in the dispersion 28 inside the CNT adhesion tank 22 due to the ultrasonic vibration applied from the ultrasonic wave generator 27. In the adhesion device 21, positions of the guide rollers 24 and 25 in a depth direction are adjusted so that the fiber bundle 20 travels in the dispersion 28 at a depth at which a standing wave node of the ultrasonic vibration, that is, a sound pressure becomes the minimum. Accordingly, a depth from a liquid surface of the dispersion 28 at which the fiber bundle 20 travels in the dispersion 28 is set as D, a wavelength of a standing wave of ultrasonic vibration generated in the dispersion 28 is set as λ, and n is set as an integer of 1 or more, these values are determined to satisfy a relationship of "D=n·(λ/2)". Note that, the wavelength λ of the standing wave can be obtained on the basis of a sound speed in the dispersion 28 and a frequency of the ultrasonic vibration applied from the ultrasonic wave generator 27.

As described above, through adjustment of the depth of the fiber bundle 20 that travels in the dispersion 28, vibration of the fibers 11 due to the sound pressure is suppressed, thread disorder due to thread sagging can be prevented, scraping between the fibers 11 or between the CNTs 14 adhered to surfaces of the fibers 11 can be suppressed, and the structure 12 having a large thickness can be formed. As the diameter of the fiber 11 is large, an influence of vibration due to the standing wave is large. Accordingly, when satisfying the condition of the depth at which the fiber bundle 20 travels in the dispersion 28, the effect of suppressing vibration of the fibers 11 is significantly obtained. In addition, stretching in the fiber axis direction due to the sound pressure of the standing wave is less likely to occur in the fiber 11, and plastic deformation of the fiber 11 in the fiber axis direction can be prevented. Note that, the depth at which the fiber bundle 20 travels in the dispersion 28 may slightly deviate from the standing wave node, and in this case, the depth is preferably set within range (n·λ/2-λ/8≤D≤n·λ/2+λ/8) that is equal to or larger than n·λ/2 - λ/8 and equal to or less than n·λ/2 + λ/8. According to this, it is possible to set the thread disorder of the fibers 11 due to thread sagging in a permissible range.

The fiber bundle 20 is taken out from the dispersion 28 and is dried. A sizing treatment and drying are sequentially performed with respect to the dried fiber bundle 20, and thus the sizing agent is applied to the structure 12. The sizing treatment can be performed by a typical method.

The sizing agent is not particularly limited, and various reactive curable resins, thermosetting resins, and thermoplastic resins can be used as described above. Examples of the thermosetting resins include an epoxy resin, a phenol resin, a melamine resin, a urea resin, unsaturated polyester, an alkyd resin, a thermosetting polyimide, a resin including a reactive group, and the like. In addition, Examples of the thermoplastic resin include general-purpose resins such as polyethylene, polypropylene, polystyrene, an acrylonitrile/styrene (AS) resin, an acrylonitrile/butadiene/styrene (ABS) resin, a methacrylic resin (PMMA or the like), and vinyl chloride, engineering plastics such as polyamide, polyacetal, polyethylene terephthalate, ultrahigh molecular weight polyethylene, and polycarbonate, and super engineering plastics such as polyphenylene sulfide, polyether ether ketone, liquid crystal polymer, polytetrafluoroethylene, polyetherimide, polyarylate, and polyimide. In the sizing treatment, it is preferable to use a solution in which a resin that becomes the sizing agent is dissolved, and for example, the solution is applied to the fiber bundle 20 to cause the sizing agent to adhere to the CNTs 14 of the structure 12.

### [Dispersion]

For example, the dispersion 28 that is used when causing the CNTs 14 to adhere to the composite material 10 is prepared as follows. A long CNT (hereinafter, referred to as "material CNT") is added to a dispersion medium, the material CNT is cut by a homogenizer, a shearing force, an ultrasonic disperser, or the like to obtain the CNTs 14 having a desired length, and to realize dispersion uniformity of the CNTs 14.

As the dispersion medium, water, alcohols such as ethanol, methanol and isopropyl alcohol, organic solvents such as toluene, acetone, tetrahydrofuran (THF), methyl ethyl ketone (MEK), hexane, normal hexane, ethyl ether, xylene, methyl acetate, and ethyl acetate, and a mixed solution containing these materials in arbitrary ratios can be used. The dispersion 28 does not contain a dispersing agent and adhesive.

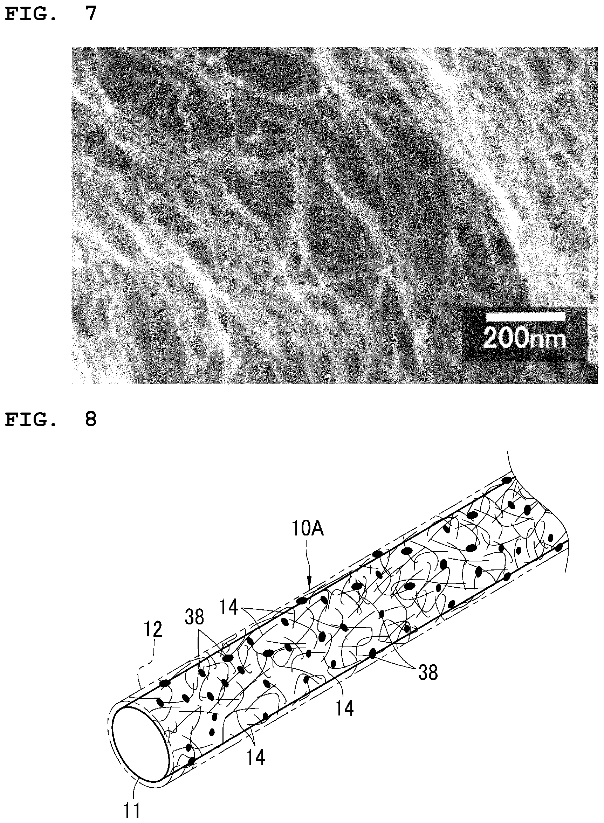

A material CNT that becomes a source of the CNTs 14 having a bent shape as described above may also have a bent shape. In the material CNT, it is preferable that diameters of individual material CNTs are arranged. An example of the material CNT is shown with a SEM photograph in Fig. 7. With regard to the material CNT, even when a length of each CNT generated from cutting, it is preferable that the CNT can be isolated and dispersed. According to this, the dispersion 28 in which the CNTs 14 satisfying the above-described length condition are isolated and dispersed is easily obtained.

In the composite material 10 in this example, as described above, since CNTs having the bent shape as the CNTs 14 are caused to adhere, other CNTs 14 enter a space formed between the CNTs 14 and the surfaces of the fibers 11 to which the CNTs 14 adhere, between the adhered CNTs 14, or the like. According to this, more CNTs 14 adhere to the fiber 11. In addition, the CNTs 14 strongly adhere to the fiber 11 and the structure 12 is formed, and thus the CNTs 14 are less likely to be peeled off from the fiber 11. In addition, in the fiber-reinforced molded article manufactured by using the composite material 10, the properties derived from the CNTs are further enhanced.

As described above, in the secondary products prepared by using the composite material 10 as described above, mechanical properties such as a vibration damping property (damping property) and a variation property of the elastic modulus are further improved in comparison to a secondary product using a composite material in the related art. With regard to the variation property of the elastic modulus, an increase in the elastic modulus of the fiber-reinforced molded article is suppressed with respect to an increase in a collision speed to the fiber-reinforced molded article.

A concentration of the CNTs 14 in the dispersion 28 is preferably within a range of 0.003 to 3 wt%. The concentration of the CNTs 14 in the dispersion 28 is more preferably 0.005 to 0.5 wt%.

In the above-described embodiment, fixing of CNTs to a surface of a fiber is obtained by coupling between the fiber and the CNT due to a Vander Waals force, but in addition to this, a binding part configured to reinforce the fixing of the CNTs to the surface of the fiber may be formed. For example, the binding part is an epoxy resin that is cured in a state of entering gaps formed between the fiber and respective surfaces (peripheral surfaces) of the CNTs directly adhered (in contact) to the fiber. For example, the epoxy resin is dissolved in a solvent such as toluene, xylene, acetone, methyl ethyl ketone, methyl isobutyl ketone (MIBK), butanol, ethyl acetate, and butyl acetate to form a solution, a fiber bundle including fibers on which a structure is formed is immersed in the solution, and heating is performed. According to this, the epoxy resin that is not cured is caused to enter gaps formed between the fibers and the respective surfaces of the CNTs, and the epoxy resin is cured.

Note that, when forming the binding part, an epoxy resin solution that is a material of the binding part may be used in a state of an emulsion. For example, an emulsifier such as a nonionic emulsifier may be added to the solution obtained by dissolving the epoxy resin in the solvent to obtain the emulsion. In addition to the epoxy resin, the binding part may be formed by, for example, a phenol resin, a polyurethane resin, a melamine resin, a urea resin, a polyimide resin, or the like. In addition, a silane coupling agent or inorganic adhesive can also be used as the binding part.

### [Second Embodiment]

A composite material of a second embodiment includes a plurality of fixing resin parts which partially fix some of a plurality of CNTs which constitute a structure to a surface of a fiber. The composite material of the second embodiment is the same as the composite material of the first embodiment except that the fixing resin parts are provided instead of the sizing agent, and thus the same reference numeral will be given to substantially the same member and detailed description thereof will be omitted.

In Fig. 8, a composite material 10A is provided with a plurality of fixing resin parts 38 which partially fix some of a plurality of the CNTs 14 constituting the structure 12 to a surface of the fiber 11. The composite material 10A is set as a resin-impregnated fiber, or is used as a single yarn that constitutes a multifilament or a reinforcement fiber of a fiber-reinforced molded article.

Each of the fixing resin parts 38 is obtained when a resin is cured in a granular shape ranging from the surface of the structure 12 to the surface of the fiber 11. The fixing resin part 38 is fixed to the surface of the fiber 11 to which the bottom of the fixing resin part 38 adheres, and is fixed to the CNTs 14 of the structure 12 that covers the fiber 11 on an upper portion in comparison to the bottom portion. In this manner, the fixing resin part 38 is fixed to both the surface of the fiber 11 and parts of the CNTs 14 to fix the CNTs 14 to the fiber 11.

As described above, the fixing resin part 38 is configured to partially fix parts of a plurality of the CNTs 14 constituting the structure 12 to the surface of the fiber 11, is provided to be scattered on the surface of the fiber 11, and fixes the CNTs 14 of the structure 12 for every site. In the fixing resin part 38 that is provided to be scattered, an upper portion thereof is exposed to the surface of the structure 12, and is observed in a state of being scattered on the surface of the structure 12.

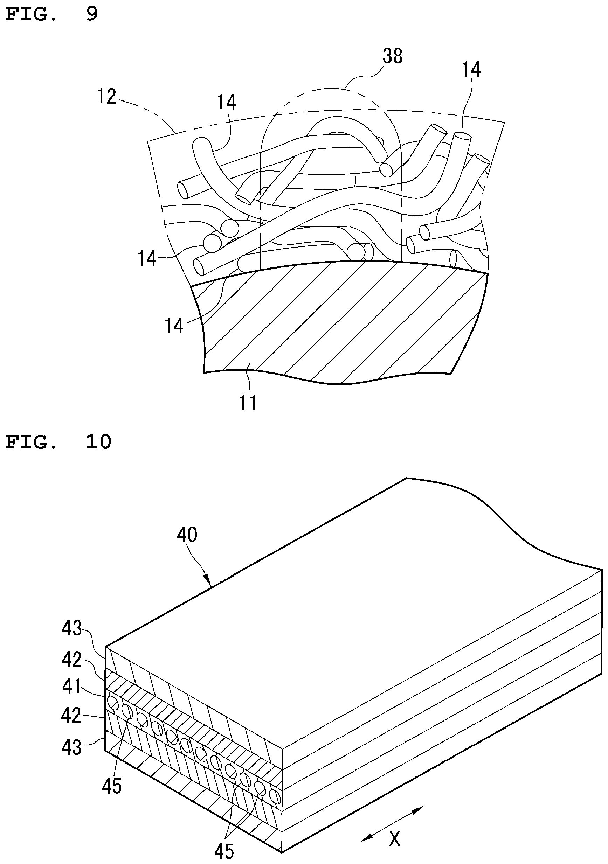

As schematically illustrated in Fig. 9, in a diameter direction of the fiber 11 (thickness direction of the structure 12), the fixing resin part 38 is formed in a range from the surface of the structure 12 to the surface of the fiber 11, is fixed to the surface of the fiber 11, and is fixed to a portion of the CNTs 14 that is included on an inner side.

In the CNTs 14 of the structure 12, a portion adheres to the surface of the fiber 11, and a portion that overlaps other CNTs 14 or a portion interposed between the other CNTs 14 is fixed to the fixing resin part 38. In addition, in the CNTs 14, an end or a central portion is fixed to the fixing resin part 38. As described above, the CNTs 14 which are fixed to the fixing resin part 38 are strongly fixed to the fiber 11 due to the fixing resin part 38. As described above, a portion of the CNTs 14, which is not covered with the fixing resin part 38, adheres to the surface of the fiber 11 by a Vander Waals force. Accordingly, the portion may be separated from the surface of the fiber 11 and float therefrom due to an operation of a force weaker in comparison to the portion that is fixed by the fixing resin part 38, and may move on the surface of the fiber 11. In addition, on the surface of the structure 12, the portion of the CNTs 14 which is not fixed by the fixing resin part 38 enters a free state in which the portion is separated from the surface of the structure 12 and floats from the surface.

As described above, since the CNTs 14 of the structure 12 are fixed by the fixing resin part 38, partial detachment of the structure 12 is further suppressed in comparison to a case where the CNTs 14 of the structure 12 are not fixed by the fixing resin part 38. According to this, properties of the fiber-reinforced molded article which are derived from the CNTs can be further enhanced. The CNTs 14 of the fixing resin part 38 are constrained to the surface of the fiber 11, and thus it is easy to cause a current to flow from the fiber 11. As a result, the CNTs 14 can contribute to an improvement of conductivity of the fiber-reinforced molded article.

Note that, all of the CNTs 14 constituting the structure 12 may be fixed to the fiber 11 by the fixing resin part 38, but it is sufficient if some of the CNTs 14 are fixed. That is, at least a part of the CNTs 14 constituting the structure 12 may be fixed by the fixing resin part 38. The CNTs 14 form a membrane as the structure 12 having a non-woven fabric structure, and thus when at least a part of the CNTs 14 constituting the structure 12 is fixed, performance can be exhibited.

In the fixing resin part 38, a number ratio N that is the number per 5 µm square on the surface (outer peripheral surface) of the structure 12 in a plan view is preferably within a range of 27 to 130. In addition, on the surface of the structure 12 in a plan view, an area ratio S of the fixing resin part 38 is preferably within a range of 6% to 45%, and more preferably within a range of 7% to 30%. On the surface of the structure 12 in a plan view, the area ratio S is a ratio of an area of the surface of the structure 12 which is covered by a plurality of the fixing resin parts 38 to a surface area of the structure 12. When the surface area of the structure 12 in a predetermined range is set as S2, and the area of the surface of the structure 12 which is covered by the fixing resin parts 38 in a predetermined range is set as S1, the area ratio S is obtained as "S = S1/S2 × 100 (%)". In the plan view, a peripheral surface of the structure 12 is observed in a planar manner from a direction orthogonal to the fiber axis direction of the fiber 11.

Note that, since the thickness of the structure 12 is sufficiently smaller than a radius of the fiber 11, the surface of the structure 12 can be regarded as the surface of the fiber 11. In addition, with regard to the fixing resin parts 38, the area of the surface of the structure 12 which is covered by the fixing resin parts 38 and the area of the surface of the fiber 11 which is covered by the fixing resin parts 38 can be regarded to be substantially the same as each other. Accordingly, the number ratio N and the area ratio S can be regarded as the number ratio that is the number of the fixing resin parts 38 per 5 µm square on the surface (outer peripheral surface) of the fiber 11 in a plan view, and a ratio of the area of the surface of the fiber 11 which is covered by the fixing resin parts 38 to the surface area of the fiber 11 on the surface of the fiber 11 in a plan view, respectively.

Actually, when the number ratio N is counted, and the area ratio S is obtained, for example, the structure 12 formed on the peripheral surface of the fiber 11 is observed in a planar manner by using a SEM photograph. In addition, an observation frame of 5 µm square is set on a planar observation image of the structure 12 in the SEM photograph, the number of the fixing resin parts 38 in the observation frame is counted, and the number is set as the number ratio N. Similarly, the area ratio S can be calculated by obtaining an area of each of the fixing resin parts 38 observed in the observation frame, and setting a total area of the fixing resin parts 38 as the area S1, and the area of the observation frame as the surface area S2. Note that, the observation frame G may be set by making the center of the observation frame G and the center of the fiber 11 in a diameter direction match each other.

When the number ratio N and the area ratio S are increased, the CNTs 14 can be reliably fixed to the surface of the fiber 11, and partial detachment of the structure 12 can be reduced. In addition, when the number ratio N and the area ratio S are decreased, a portion of the CNTs 14 which is not fixed by the fixing resin parts 38 increases, and the degree of freedom of the CNTs 14 and the degree of freedom of the structure 12 can be raised.

When the above-described number ratio N is 27 or more, or the area ratio S is 6% or more, the CNTs 14 can be reliably fixed to the fiber 11 by the fixing resin parts 38, the effect of reducing partial detachment of the structure 12 is reliably obtained, and properties of the fiber-reinforced molded article which are derived from the CNTs can be enhanced. In addition, when the number ratio N is 130 or less or the area ratio S is 45% or less, the CNTs 14 which are entirely covered with the fixing resin parts 38 can be sufficiently reduced. According to this, the properties of the fiber-reinforced molded article which are derived from the CNTs, particularly, the effect based on floating of some of the CNTs 14 from the surface of the structure 12 is reliably obtained. It is preferable that both the number ratio N and the area ratio S are set within the above-described ranges in combination.

As to be described later, under constant conditions, the area ratio S can be increased or decreased in approximately proportion to the number ratio N, and the number ratio N and the area ratio S can simultaneously satisfy the conditions. Note that, in a case where the area ratio S is satisfied, the total area of the fixing resin parts 38 in 5 µm square on the surface of the structure 12 in a plan view becomes within a range of 1.5 to 11.25 µm².

On the surface of the structure 12, a substantial area per one of the fixing resin parts 38 is preferably set within a range of 0.03 to 1.12 µm². When an area of each of the fixing resin parts 38 is 0.03 µm² or more, a fixing strength of reliably fixing the CNTs 14 to the surface of the fiber 11 is obtained. Even in this case, the effect of reducing partial detachment of the structure 12 is reliably obtained. When the area of each of the fixing resin parts 38 is 1.12 µm² or less, the degree of freedom of the CNTs 14 is sufficiently obtained.

The area ratio S and the number ratio N of the fixing resin parts 38 in a plan view, or the substantial area of each of the fixing resin parts 38 can be obtained by using image analysis software (for example, Winroof2015 (manufactured by Mitani Corporation)).

As described above, in the fiber-reinforced molded article and the like manufactured from the composite material 10A including the structure 12 constituted by the CNTs 14 having the bent shape, the properties derived from the CNTs 14 are further improved in comparison to the related art.

The elastic modulus of the fiber-reinforced molded article using the composite material 10A can be raised by a constraining effect of suppressing displacement of the fiber 11 due to the composite region. In addition, in the fiber-reinforced molded article, an increase in the elastic modulus of the fiber-reinforced molded article is suppressed with respect to an increase in a collision speed to the fiber-reinforced molded article by the constraining effect due to the composite region between the fibers. As a result, speed dependency of the elastic modulus decreases. In addition, resistance to propagation of interlayer peeling fracture can be increased due to the fixing resin parts 38.

A process of manufacturing the composite material 10A is the same as in the first embodiment except that a fixing resin application treatment for forming the fixing resin parts 38 is performed instead of the sizing treatment for causing the sizing agent to adhere to the surface of the structure 12. That is, the fixing resin application treatment is performed with respect to the fiber bundle 20 that is dried after being drawn from the dispersion 28 (refer to Fig. 2), thereby forming the fixing resin parts 38. The fixing resin application treatment can be set as a treatment corresponding to a material that becomes the fixing resin parts 38 or a shape thereof.

As a preferred method of the fixing resin application treatment, a method of using an emulsion type treatment liquid in which an uncured resin (polymer) that becomes the fixing resin parts 38 is dispersed in a dispersion medium in a liquid droplet shape is exemplified. In this method, an adhesion treatment in which the fiber bundle 20 in which the structure 12 is formed on each fiber 11 is opened and is brought into contact with the treatment liquid to cause the resin to adhere to the fiber bundle 20, and a curing treatment in which the dispersion medium is evaporated after the adhesion treatment and the resin is cured to be the fixing resin parts 38 are sequentially performed.

As the resin in the treatment liquid, a resin having a curing property, that is, a curable resin is used. The curable resin may be any of a thermosetting resin, a reactive curable resin, and the like. Note that, a cured resin obtained through curing of the curable resin may be a thermoplastic resin. Specific examples of the thermoplastic resin include an epoxy resin, a urethane resin, a urea resin, a polyimide resin, vinyl acetate, an acrylic resin, an olefin resin, vinyl chloride, a phenol resin, a melamine resin, a rubber-based resin, a silicon-based resin, inorganic adhesive, and the like, but there is no limitation to the resins.

Note that, it is preferable that the fixing resin parts 38 have high affinity with the matrix resin. According to this, it is preferable that the fixing resin parts 38 and the matrix resin are, for example, a combination of polar resins, or a combination of non-polar resins.

Examples of the dispersion medium of the treatment liquid include water, ethanol, acetone, MEK, N,N-dimethylformamide, N,N-dimethylacetamide, N-methylpyrrolidone, toluene, xylene, and the like. The dispersion media can be used alone or in combination of two or more kinds. As the dispersion medium, water is preferable from the viewpoints of handleability and safety. The concentration of the resin in the treatment liquid after dilution is appropriately adjusted to be a target amount of the fixing resin parts 38 adhered (a ratio (wt%) of the mass of the fixing resin parts 38 to the composite material 10A) . The amount of the fixing resin parts 38 adhered to the surfaces of the fibers 11 after the drying treatment is preferably within a range of 0.1 to 5.0 wt%, and more preferably within a range of 0.3 to 3.0 wt%.

A particle size of the resin in the treatment liquid is preferably within a range of 0.05 to 1 µm, and more preferably within a range of 0.1 to 0.4 µm. The particle size of the resin in the treatment liquid can be obtained by a laser analysis method. When the particle size of the resin in the treatment liquid is 0.05 µm or more, the CNTs 14 can be reliably fixed to the surfaces of the fibers 11, and when the particle size is 1 µm or less, the resin can reliably enter between the CNTs 14 constituting the structure 12, and the CNTs 14 can be reliably prevented from being covered with the resin. In addition, when the particle size is 0.1 µm or more, it can be said that the particle size is a resin size sufficient for fixing the structure 12 having a nonwoven fabric shape, and when the particle size is 0.4 µm or less, partial fixing of the structure 12 becomes possible.

In a case of using the emulsion type treatment liquid containing the resin having a particle size in a range of 0.1 to 0.4 µm, it is possible to form the fixing resin parts 38 each having an area in a range of 0.03 to 1.12 µm². In a case of using the treatment liquid in which the amount of the fixing resin parts 38 adhered after the curing treatment is adjusted to be 0.1% by mass to 5.0% by mass, the number ratio N can be set within a range of 27 to 130.

The adhesion treatment method using the treatment liquid is not particularly limited, and examples thereof include a roller immersion method, a roller contact method, a spray method, and the like. In addition, the curing treatment method is not particularly limited, and for example, hot wind, a hot plate, a heating roller, various infrared heaters, and the like can be used.

Fig. 10 illustrates a flat belt 40 as an example of products using the composite material 10. For example, the flat belt 40 is used as a power transmission belt or the like. The flat belt 40 has a structure in which a reinforcement fabric 42 and a surface rubber layer 43 are laminated on both surfaces of an inner rubber layer 41, and a cord core wire 45 is embedded in the inner rubber layer 41.

The inner rubber layer 41 is formed from, for example, nitrile rubber, carboxylated nitrile rubber, hydrogenated nitrile rubber, chloroprene rubber, chlorosulphonated polyethylene, polybutadiene rubber, natural rubber, EPM, EPDM, urethane rubber, acrylic rubber, or the like. The reinforcement fabric 42 is provided to improve durability of the flat belt 40, and for example, woven or knitted fabrics such as a polyester fiber, a nylon fiber, an aramid fiber, a glass fiber, a carbon fiber and cotton are used. The surface rubber layer 43 is provided to obtain a predetermined frictional force between the flat belt 40 and a conveying object or a power transmission device, and is formed from, for example, nitrile rubber, carboxylated nitrile rubber, hydrogenated nitrile rubber, chloroprene rubber, chlorosulphonated polyethylene, polybutadiene rubber, natural rubber, EPM, EPDM, urethane rubber, acrylic rubber, silicone rubber, or the like.

As the cord core wire 45, the above-described multifilament 15 in which composite materials 10 are coupled to each other by the matrix resin 16 that is impregnated up to the structure 12 and is cured is used. In the cord core wire 45, a fiber axial direction of the multifilament 15 and a longitudinal direction of the flat belt 40 (a traveling direction of the flat belt 40, an arrow X direction) match each other. In addition, a plurality of the cord core wires 45 are arranged with a predetermined pitch in a width direction orthogonal to the longitudinal direction of the flat belt 40. In a case of using a twisted multifilament as the cord core wire 45, it is preferable to alternately arrange an S-twisted one and a Z-twisted one in order to suppress meandering of the belt. As described above, since the flat belt 40 includes the multifilament using the composite material 10 as the cord core wire 45, elongation against tension or compression is small, and durability against repetitive bending is high.

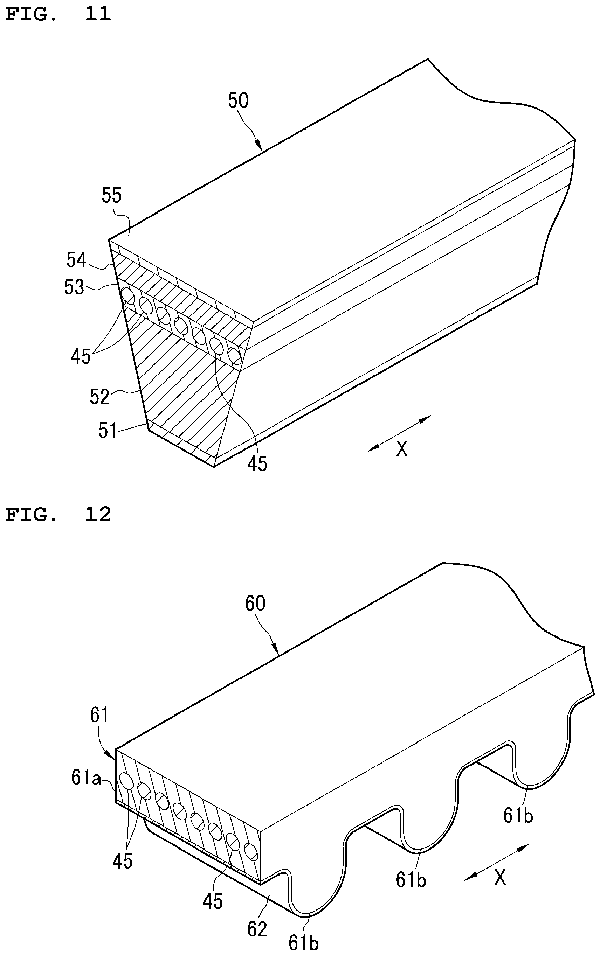

Description has been given of an example of the flat belt, but the composite material can be used as a cord core wire of various belts, and particularly, the composite material is suitable for a cord core wire of a toothed belt represented by a timing belt, or a transmission belt such as a V-belt and a V-ribbed belt. An example illustrated in Fig. 11 uses the multifilament 15 as a cord core wire 45 of a V-belt 50, and an example illustrated in Fig. 12 uses the multifilament 15 as a cord core wire 45 of a timing belt 60. The V-belt 50 in Fig. 11 has a structure in which a lower fabric 51, a bottom rubber layer 52, an adhesive rubber layer 53, a rear rubber layer 54, and an upper fabric layer 55 are laminated, and the cord core wire 45 is embedded in the adhesive rubber layer 53. In addition, the timing belt 60 in Fig. 12 has a structure which includes a rubber layer 61 including a belt main body portion 61a and a plurality of tooth portions 61b, and a tooth fabric 62 that cover a surface of the rubber layer 61 on the tooth portion 61b side, and in which the cord core wire 45 is embedded in the belt main body portion 61a.

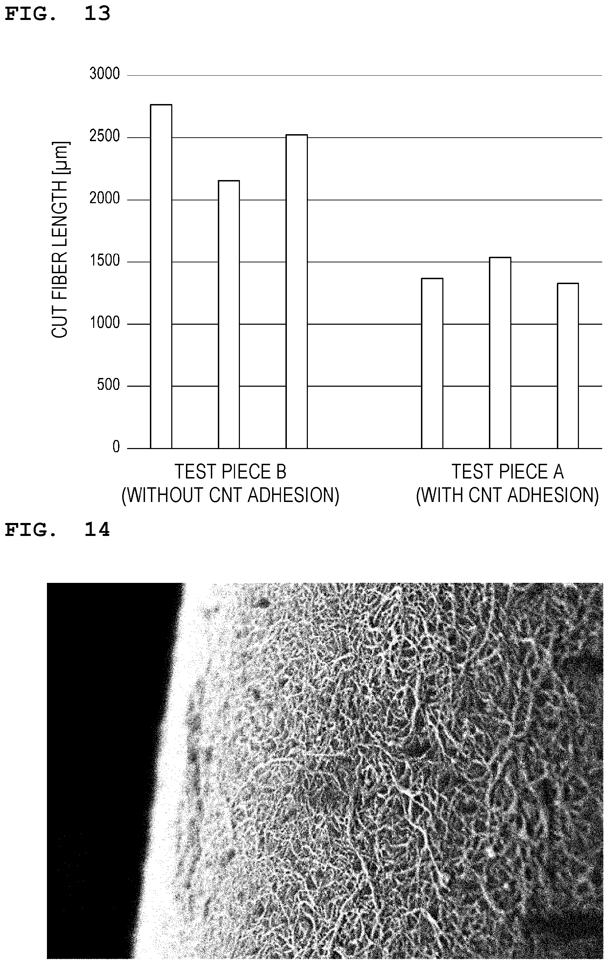

Fig. 13 illustrates results obtained by evaluating an interface adhesive strength between a glass fiber and a matrix resin due to a difference in presence or absence of CNT adhesion. In the evaluation, a plurality test pieces A in which a CNT composite fiber using a glass fiber as the fiber 11 is embedded in a soft epoxy resin, and a plurality of test pieces B in which a glass fiber (raw yarn) is embedded in a soft epoxy resin were prepared, and evaluation was performed by a fragmentation method.

With respect to the test pieces A, in accordance with the above-described procedure, the glass fiber (raw yarn) was allowed to pass through the dispersion 28 irradiated with ultrasonic waves, and the CNTs 14 were caused to sufficiently and uniformly adhere to the glass fiber to obtain the fiber 11 on which the structure 12 is formed. Note that, the sizing agent or the binding part was not applied. The test pieces A were prepared by drawing one glass fiber on which the structure 12 is formed, and by embedding the glass fiber in a soft epoxy resin. A diameter of the glass fiber (raw yarn) was approximately 16 µm. A SEM photograph obtained by observing the structure 12 that is formed on a surface of the glass fiber used in the test pieces A is shown in Fig. 14.

The test pieces B were prepared by embedding one glass fiber (raw yarn) to which CNTs do not adhere in a soft epoxy resin. Note that, preparation conditions of the test pieces B were set to be the same as in the test pieces A except that the CNTs do not adhere to the glass fiber.

With respect to the test pieces A and the test pieces B, a tensile load was applied until the glass fiber is not cut, a length of each cut piece of the glass fiber at a constant length in the test piece was measured for each test piece, and an average (cut fiber length) of the length of the cut pieces was obtained with respect to each test piece.

The cut fiber length of the test pieces A and B which was measured by the fragmentation method as described above is shown in Fig. 13. It can be seen that in the test pieces A, that is, test pieces in which the CNTs 14 are caused to adhere to the glass fiber, the cut fiber length is shorter and the interface adhesive strength between the glass fiber and the matrix resin is higher in comparison to the test pieces B, that is, test pieces in which the CNTs are not caused to adhere to the glass fiber. In the test pieces A and B, since the glass fiber has a diameter of 10 µm or more, stress concentration at an interface becomes significant. However, in the test pieces A, since the CNTs 14 exist on the surface of the glass fiber, it is considered that a resin elastic modulus at the interface is improved, and stress concentration is mitigated, and thus the interface adhesive strength is improved.

### Reference Sign List

- 10, 10A:: Composite material
- 11:: Fiber
- 12:: Structure
- 14:: Carbon nanotube
- 20:: Fiber bundle
- 38:: Fixing resin part

## Claims

1. A composite material, comprising:
a fiber; and
a structure which includes a plurality of carbon nanotubes and has a network structure in which the carbon nanotubes are in direct contact with each other, and in which the carbon nanotubes directly adhere to a surface of the fiber,
wherein the carbon nanotubes have a bent shape including a bent portion.

2. The composite material according to claim 1,
wherein a thickness of the structure is within a range of 10 nm to 300 nm.

3. The composite material according to claim 1 or 2,
wherein a diameter of the fiber is 5 µm to 100 pm.

4. A method for manufacturing a composite material, comprising:
an ultrasonic process of applying ultrasonic vibration to a dispersion in which a plurality of carbon nanotubes having a bent shape including a bent portion are dispersed; and
an adhesion process of immersing a fiber in the dispersion to which the ultrasonic vibration is applied, and adhering the plurality of carbon nanotubes to the fiber to form a structure on a surface of the fiber.

5. The method for manufacturing a composite material according to claim 4,
wherein in the adhesion process, the fiber having a long length is traveled in the dispersion, and when a depth from a liquid surface of the dispersion in which the fiber travels is set as D, a wavelength of a standing wave of ultrasonic vibration generated in the dispersion due to the ultrasonic process is set as λ, and n is set as an integer of 1 or more, a relationship of n·λ/2 - λ/8 ≤ D ≤ n·λ/2 + A/8 is satisfied.

6. The method for manufacturing a composite material according to claim 4 or 5,
wherein in the ultrasonic process, a frequency of the ultrasonic vibration is within a range of 40 kHz to 950 kHz.
